# EUROPEAN PATENT APPLICATION

(11) **EP 4 310 210 A1**
(43) Date of publication of application: **24.01.2024**
(21) Application number: 22185629.7
(22) Date of filing: 19.07.2022
(51) Int. Cl.: C22B 7/00, B01D 53/94, B01J 35/00, B01J 35/04, C01B 21/26, C22B 11/02

(54) **VOLATILE AND PRECIOUS METAL RECOVERY SYSTEM MADE OF STACKED SILVER-COMPRISING ELEMENTS**

(71) Applicant: Yara International ASA, 0277 Oslo (NO)
(72) Inventor: Waller, David, 3931 Porsgrunn (NO)
(74) Representative: De Clercq & Partners

(57) **Abstract**

The present disclosure relates to a recovery system for recovering volatile precious metals from a gas phase. The recovery system is characterized in that it comprises a plurality of woven or knitted metallic silver gauzes stacked on top of each other, or a plurality of layers of a ceramic or glass support coated with metallic silver, or a combination of both. The present disclosure further relates to a method for recovering volatile precious metals from a gas phase. The present disclosure further relates to a system for the catalytic conversion of ammonia into nitric oxide comprising a recovery system according to the recovery system of the disclosure. The present disclosure further relates to the use of the system of the disclosure for the catalytic conversion of ammonia into nitric acid, for the catalytic ammonia into nitric oxide. The present disclosure further relates to method for revamping a system for the catalytic conversion of ammonia into nitric oxide, the system comprising a catalytic system comprising one or more precious metals selected from the group consisting of Pd, Pt and Rh.

## Description

### TECHNICAL FIELD

The present disclosure is in the field of systems for recovering precious metals evaporating in a gas phase.

### INTRODUCTION

Several reactions require a catalyst as they are not or less thermodynamically favoured. Such catalysts are often based upon precious, heavy metals, such as the so-called platinum group metals. The six platinum-group metals are ruthenium, rhodium, palladium, osmium, iridium, and platinum. Other metals upon which catalysts can be based upon include copper, silver, gold, mercury, iron, cobalt, nickel, zinc and rhenium.

An example of a reaction involving the use of a catalyst comprising precious metals is the oxidation of ammonia into nitric oxide, in the first step of nitric acid production according to the Ostwald process. Ammonia oxidation catalysts commonly comprise platinum and rhodium in the form of an alloy, in order to assist the oxidation of ammonia, that is the fixing of oxygen onto the nitrogen atom of ammonia.

The catalyst and the corresponding support structures in ammonia burners, commonly named burner baskets, are submitted to temperatures as high as 950°C. Consequently, a challenge is that platinum evaporates and is lost in the gas phase. Typically, as palladium is expensive, recovery gauzes are present in the ammonia oxidation burner that comprise palladium for recovering the platinum lost in the gas phase. Those recovery gauzes are located in the vicinity of the catalyst gauzes and below the catalyst gauzes, that is downstream of the catalyst gauzes with a gas flow from the top to the bottom of the ammonia oxidation burner. Therefore, the recovery gauzes are also exposed to temperatures as high as 950°C and the expensive palladium from the palladium recovery can also be lost in the gas phase in the ammonia oxidation burner.

### BACKGROUND

GB1343637 relates to a process (Engelhard Minerals & Chemicals Corp, 1971), and a related device, for recovering platinum group metals entrained in a hot gas stream, wherein the gas is passed through a gettering device in the form of an inert ceramic honeycomb structure which is coated with a getter containing gold to absorb the platinum. The document defines gettering as a process wherein the platinum group metals are removed from the gas stream by absorption on a surface and states that gold, silver, palladium, rhodium, and platinum, and combinations thereof are effective getter materials for the platinum group metals. However, in the process/device considered in GB1343637, it is further disclosed that silver or alloys containing silver cannot be used since the silver migrates into the ceramic honeycomb structure and has a harmful effect thereon.

EP63450 (Johnson Matthey, 1982) generally discloses a getter device and a related process for recovery of a precious metal lost from a precious metal-containing catalyst operating at elevated temperature, wherein the getter comprises an agglomeration or assemblage of unwoven fibres made from a metal selected from the group consisting of ruthenium, palladium, iridium, platinum, gold, silver, rhodium and alloys containing one or more or the said metals. This document primarily focuses on Pd/Au alloys and is silent on using silver for recovering volatilized palladium.

GB668935 (Evonik Degussa GmbH, 1949) relates to a process and related device for platinum recovery of volatilized platinum, originating from a catalyst for e.g. the oxidation of ammonia to nitrogen oxides. While it primarily focuses on the use of gold as platinum capture material, it mentions that silver can also be used as platinum trap. In this context, GB668935 claims a process for recovery of platinum, wherein the platinum is trapped on the surface of baffles, disposed at a place where the temperature is at least 700 °C and wherein some of the baffles have a coating of silver or of a silver alloy with gold, palladium or platinum. However, the use of silver presented some disadvantages (e.g. stability), although a silver coating on a metal support (e.g. Ni) was found to be stable.

US20130149207 (Johnson Matthey, 2012) relates to an exhaust system arrangement comprising a platinum and palladium catalyst and a downstream SCR catalyst and a component capable of trapping and/or alloying with a gas phase platinum group metal, wherein this component is typically a metal selected from the group consisting of gold, palladium and silver, preferably a Pd/Au alloy. Accordingly, a solution remains necessary to both achieve flexibility of the recovery agent at a broad range of temperatures, such that the Ag loss is minimized, and not interfere with the other components of the system comprising the catalytic gauze.

### SUMMARY

In one aspect of the disclosure, a recovery system for recovering volatile precious metals from a gas phase is disclosed. The system is characterized in that the recovery system comprises a plurality of woven or knitted metallic silver gauzes stacked on top of each other, or a plurality of layers of a ceramic or glass support coated with metallic silver, or a ceramic monolith structure, or a combination thereof. The inventors have found that when the recovery system comprises a plurality of woven or knitted metallic Ag gauzes stacked on top of each other, or a plurality of layers of a ceramic or glass support coated with metallic Ag, or a combination of both, the loss of Ag in the evaporation phase is reduced. This is due to the fact that when there are several Ag recovery elements on top of each other, some elements are upstream with respect to others, that is they are being contacted with the gas stream generated from the catalytic conversion earlier than some other elements. As a result the vapor phase becomes richer in Ag and, consequently, the evaporative loss in Ag from the Ag recovery elements downstream is reduced.

In one embodiment according to the recovery system of the disclosure, the system comprises at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3. In one embodiment according to the recovery system of the disclosure, the system comprises from 3 to 50 woven or knitted metallic silver gauzes, or from 10 to 30 ceramic or glass support coated with metallic silver, or a combination of woven or knitted metallic silver gauzes and layers of a ceramic or glass support coated with metallic silver, the number of combined gauzes and layers ranging from 3 to 50.

In one embodiment according to the recovery system of the disclosure, the gauzes have a wire diameter ranging from 150 to 400 micron.

In one aspect of the disclosure, a method for recovering volatile precious metals from a gas phase is disclosed. The method comprises the step of:
- contacting the gas phase comprising volatile precious metals with a recovery system according to any one of claims 1 to 4.

In one embodiment according to the method of the disclosure, the gas phase comprising volatile precious metals has a temperature ranging from 750 °C to about 950 °C.

In one embodiment according to the method of the disclosure, the gas phase comprising volatile precious metals has a temperature ranging from 850 to 930 °C .

In one embodiment according to the method of the disclosure, the method further comprises the step of:
- operating a catalytic system in a system for the catalytic conversion of ammonia into nitric oxide, wherein volatile precious metals are evaporated from the catalytic system, thereby producing a gas phase comprising volatile precious metals.

In one embodiment according to the method of the disclosure, the method is used for recovering volatile precious metals, evaporating, during the catalytic conversion of ammonia into nitric oxide, from the catalytic system used therein, wherein the catalytic system comprises Pt and Rh.

In one embodiment according to the method of the disclosure, the method is used for recovering volatile precious metals, evaporating, during the catalytic conversion of ammonia into nitric oxide, from the catalytic system used therein, wherein the catalytic system comprises Pt, Rh and Pd.

In one aspect of the disclosure, a system for the catalytic conversion of ammonia into nitric oxide, is disclosed. The system comprises:
- a catalytic system comprising Pt and Rh and operable at a temperature ranging from 750 °C to 950 °C; and, downstream thereof;
- a recovery system according to the recovery system of the disclosure.

In one embodiment according to the system of the disclosure, the catalytic system further comprises Pd.

In one embodiment according to the system of the disclosure, the system is operable at a temperature ranging from 850 to 930 °C .

In one aspect of the disclosure, the use of the system of the disclosure for the catalytic conversion of ammonia into nitric acid, is disclosed.
- In one aspect of the disclosure, a method for revamping a system for the catalytic conversion of ammonia into nitric oxide, the system comprising:
   ∘ one or more precious metals selected from the group consisting of Pd, Pt and Rh; and
   ∘ a Pd-containing recovery system for recovering a volatile precious metal evaporating during the conversion of ammonia into nitric oxide in the catalytic system;
into a system of the disclosure, is disclosed. The method comprises the step of:
- introducing a recovery system according to the recovery system.
In one embodiment according to the method for revamping of the disclosure, the method further comprises the step of:
- removing the Pd-containing recovery system.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed. Where the term "about" when applied to a particular value or to a range, the value or range is interpreted as being as accurate as the method used to measure it.

As defined herein, precious metals are platinum group metals, namely ruthenium, rhodium, palladium, osmium, iridium, and platinum.

As defined herein, a catalytic system comprises a catalytic gauze and a Pd recovery gauze if Pd is present within the catalytic system.

As defined herein, selectivity means that 2 to 2.5 time more of a precious metal is recovered with respect to another precious metal.

In one aspect of the disclosure, a recovery system for recovering volatile precious metals from a gas phase is disclosed. The system is characterized in that the recovery system comprises a plurality of woven or knitted metallic silver gauzes stacked on top of each other, or a plurality of layers of a ceramic or glass support coated with metallic silver, or a ceramic monolith structure, or a combination thereof. Ceramic tiles are particularly suitable as layers, while Rashig rings and pellets are particularly suitable as a support to be coated with silver.

The inventors have found that when the recovery system comprises a plurality of woven or knitted metallic Ag gauzes stacked on top of each other, or a plurality of layers of a ceramic or glass support coated with metallic Ag, or a combination of both, the loss of Ag in the evaporation phase is reduced. This is due to the fact that when there are several Ag recovery elements on top of each other, some elements are upstream with respect to others, that is they are being contacted with the gas stream generated from the catalytic conversion earlier than some other elements. As a result the vapor phase becomes richer in Ag and, consequently, the evaporative loss in Ag from the Ag recovery elements downstream is reduced.

In one embodiment according to the recovery system of the disclosure, the system comprises at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3. When at least 3 Ag-coated recovery elements constitute the Ag-coated recovery system, the loss of silver is reduced. Hence, in order to reduce Ag losses, it is beneficial to use at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3.

In one embodiment according to the recovery system of the disclosure, the system comprises from 3 to 50 woven or knitted metallic silver gauzes, or from 10 to 30 ceramic or glass support coated with metallic silver, or a combination of woven or knitted metallic silver gauzes and layers of a ceramic or glass support coated with metallic silver, the number of combined gauzes and layers ranging from 3 to 50.

In one embodiment according to the recovery system of the disclosure, the gauzes have a wire diameter ranging from 150 to 400.

Using such gauzes offers increased surface area such that the gas is optimally contacted with the gauze, leading to optimal trapping of the precious metal in the gas phase and subsequent formation of an alloy of the metal with Ag, for the recovery of the precious metal.

The person skilled in the art will, without difficulty optimize the diameter such that the quantity of silver present on the gauze is sufficient to achieve the target silver recovery. The system of the disclosure is flexible in that the diameter of the different gauzes present in the system can have different diameters, the diameter decreasing in the downstream direction. This means that the gauzes most upstream have a larger diameter to offer some sacrificial silver, that is silver that is going to evaporate and contribute the saturation in silver of the gas phase, thereby reducing the evaporative of silver from the gauzes further downstream.

In one aspect of the disclosure, a method for recovering volatile precious metals from a gas phase is disclosed. The method comprises the step of contacting the gas phase comprising volatile precious metals with a recovery system according to any one of claims 1 to 4.

The recovery system of the disclosure enabling the recovery of a precious metal for the gas phase, it is of particular benefit to use the recovery system of the disclosure in processes generating a phase comprising a precious metal, through contacting the generated gas phase with the recovery system of the disclosure, in order to recover the precious metal in the gas phase.

In one embodiment according to the method of the disclosure, the gas phase comprising volatile precious metals has a temperature ranging from 750 °C to about 950 °C.

The inventors have established that the method of the disclosure can be performed within a broad temperature range for the gas phase generated by the catalytic system and going through the recovery system. Hence the method of the disclosure can be applied to a broad range of catalytic processes. When the catalytic is performed at temperatures as low as 750 °C , the energy consumption of the production process is reduced. Further the evaporation of all precious Pd, Pt and Ag metals is reduced, which in turn reduces the loss of those metals in the production process.

In one embodiment according to the method of the disclosure, the gas phase comprising volatile precious metals has a temperature ranging from 850 to 930 °C .

As explained above, in the presence of a plurality of woven or knitted metallic Ag gauzes stacked on top of each other, or a plurality of layers of a ceramic or glass support coated with metallic Ag, a monolith structure or a combination thereof, the loss of Ag in the evaporation phase is reduced. This is due to the fact that when there are several Ag recovery elements on top of each other, some elements are upstream with respect to others, that is they are being contacted with the gas stream generated from the catalytic conversion earlier than some other elements. As a result the vapor phase becomes richer in Ag and, consequently, the evaporative loss in Ag from the Ag recovery elements downstream is reduced.

Hence, for the catalytic processes to be performed at temperatures as high as from 850 to 930 °C , it is beneficial to practice the method of the disclosure using a recovery system comprising a plurality of woven or knitted metallic Ag gauzes stacked on top of each other, or a plurality of layers of a ceramic or glass support coated with metallic Ag, or a monolith structure or a combination thereof. This means that it is particularly beneficial to use the system of the disclosure in catalyst process performed at temperatures ranging from 850 to 930 °C .

In one embodiment according to the method of the disclosure, the method further comprises the step of operating a catalytic system in a system for the catalytic conversion of ammonia into nitric oxide, wherein volatile precious metals are evaporated from the catalytic system, thereby producing a gas phase comprising volatile precious metals.

Nitric acid produced through the oxidation of ammonia, according to the Ostwald process is a widely employed industrial process, the first step being the oxidation of ammonia into nitric oxide, at temperatures ranging from 800 to 950 °C , onto precious metal-containing catalytic gauzes. The method of the disclosure is therefore well designed for being practiced in ammonia oxidation burners, in order to recover the precious metal from the catalytic gauzes after their evaporation.

In one embodiment according to the method of the disclosure, the method is used for recovering volatile precious metals, evaporating, during the catalytic conversion of ammonia into nitric oxide, from the catalytic system used therein, wherein the catalytic system comprises Pt and Rh.

The catalytic gauzes that are part of ammonia oxidation burners comprise platinum and rhodium. It is, therefore, beneficial to practice the method of the disclosure in ammonia oxidation burners, using Pt and Rh-containing catalytic gauzes.

In one embodiment according to the method of the disclosure, the method is used for recovering volatile precious metals, evaporating, during the catalytic conversion of ammonia into nitric oxide, from the catalytic system used therein, wherein the catalytic system comprises Pt, Rh and Pd.

In conventional ammonia oxidation burners, a Pd recovery gauze is included along with a Pt and Rh catalytic gauze. In this manner, the Pd in the recovery gauze traps the volatile Pt evaporating during the catalytic conversion, which allows for Pt recovery. However, precious volatile Pd is lost in the gas phase. By further utilizing an Ag-coated recovery system during the conversion of ammonia into nitric acid, also the Pd evaporating, as well as Pt non-trapped by the Pd recovery gauze, can be recovered through the formation of Pd-Ag, Pt-Ag or Pt-Pd-Ag alloys.

In one aspect of the disclosure, a system for the catalytic conversion of ammonia into nitric oxide is disclosed. The system comprises a catalytic system comprising Pt and Rh and operable at a temperature ranging from 750 °C to 950 °C; and, downstream thereof; and a recovery system according to the recovery system of the disclosure.

The system of the disclosure allows to produce nitric acid from ammonia, using a conventional Pt and Rh-based catalytic gauze, typically performed at temperatures ranging from 800 °C to 950 °C . The inventors have found that the method of the disclosure can be performed within a broad temperature range for the gas phase generated by the catalytic system and going through the recovery system. Further, the inventors have established that it is possible to perform the catalytic conversion of ammonia into nitric acid, at temperatures as low as 750 °C , while retaining above 90% conversion of ammonia into nitric oxide.

When the catalytic conversion is performed at temperatures as low as 750 °C, the energy consumption of the production process is reduced. Further the evaporation of precious metals is reduced, which in turn reduces the loss of those metals in the production process. Through the presence of the recovery system of the disclosure, the precious Pt metal from the catalytic gauze can in any event be recovered. In one embodiment according to the system of the disclosure, the catalytic system further comprises Pd.

In conventional ammonia oxidation burners, a Pd recovery gauze is included along with a Pt and Rh catalytic gauze. In this manner, the Pd in the recovery gauze traps the volatile Pt evaporating during the catalytic conversion, which allows for Pt recovery. However, precious volatile Pd is lost in the gas phase. By further utilizing an Ag-coated recovery system during the conversion of ammonia into nitric acid, also the Pd evaporating, as well as Pt non-trapped by the Pd recovery gauze, can be recovered through the formation of Pd-Ag, Pt-Ag, or Pt-Pd-Ag alloys.

In one embodiment according to the system of the disclosure, the system is operable at a temperature ranging from 850 to 930 °C .

This temperature range is especially suited for converting ammonia to nitric oxide and achieving a selectivity for the conversion above 96%, while minimizing the drawbacks associated with high temperature operation such as energy consumption and equipment damage.

In one aspect of the disclosure, the use of the system of the disclosure for the catalytic conversion of ammonia into nitric acid, is disclosed.

In one aspect of the disclosure, a method for revamping a system for the catalytic conversion of ammonia into nitric oxide, the system comprising a catalytic system comprising one or more precious metals selected from the group consisting of Pd, Pt and Rh and a Pd-containing recovery system for recovering a volatile precious metal evaporating during the conversion of ammonia into nitric oxide in the catalytic system; into a system of the disclosure, is disclosed. The method comprises the step of introducing a recovery system according to the recovery system.

As described above, Pd recovery gauzes are typically integrated in conventional in ammonia oxidation burner for performing the catalytic conversion of ammonia into nitric acid. That is a Pd recovery gauze is combined with a conventional Pt and Rh-containing catalytic gauze and the recovery gauze and the catalytic gauze together form the catalytic system. In the presence of Pd recovery gauzes, when the catalytic conversion of ammonia into nitric acid is performed at temperatures of 800 °C or higher, such as up to 950 °C, the Pt evaporated from the catalytic gauze is recovered by the Pd recovery gauze. The inventors have found that it is possible to combine an Ag-coated recovery system with a catalytic system comprising a catalytic Pt and Rh gauze and a Pd recovery gauze: not only is the Pt recovery increased through the presence of both a Pd and an Ag-coated recovery system, the presence of the Ag-coated recovery system further results in the recovery of the Pd evaporated from the Pd recovery gauzes. Said otherwise, both Pt and Pt are recovered and the recovery of the precious Pt metal from the Pd recovery gauze is not associated with a loss of the precious Pd metal.

In one embodiment according to the method for revamping of the disclosure, the method further comprises the step of removing the Pd-containing recovery system.

Alternatively, since Ag is suitable for recovering the volatile precious Pt metal, it is possible to perform the conversion of ammonia into nitric acid solely with a Pt and Rh-based catalytic gauze as part of the catalytic system, that is in the absence of a Pd recovery gauze, thus simplifying the system.

### EXAMPLE

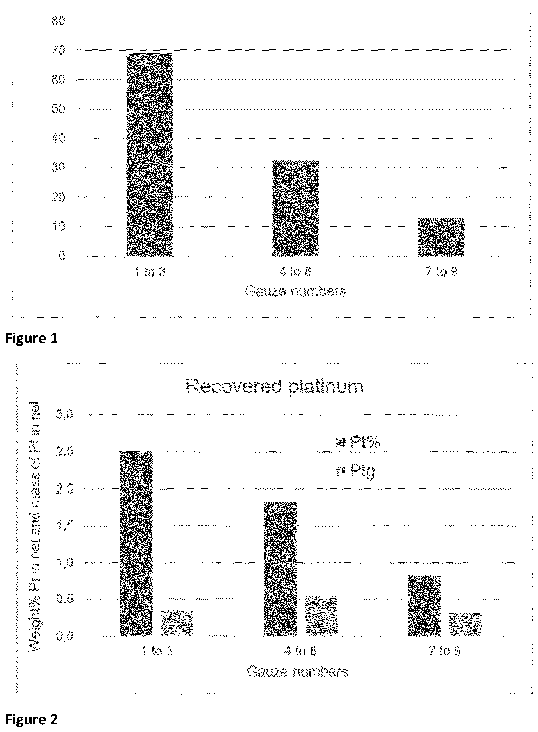

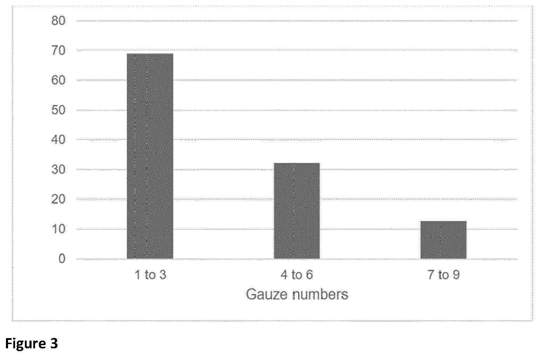

Three sets Ag nets, each set comprising in turn 3 Ag nets, were installed in a 22 cm pipe at three different locations downstream of a catalytic gauze for converting ammonia into nitric oxide and operated at about 840 °C , exposing them to about that of the catalytic gauze. The catalytic gauze comprised Pt and Rh, together accounting for 5 weight% of the gauze. The Ag nets were sourced from K. A. Rasmussen and were 85 µm warp knitted gauzes. After a combustion campaign of 22 days, in which 6.83 t of ammonia was combusted producing about 25.3 t of nitric acid, the gauzes were recovered for analysis. Mass changes and gauze compositions are summarized in Table 1. The 5 weight % Pt/Rh combustion gauzes lost 4.22g. Pt and Pd were captured on the Ag nets, however Rh was not recovered and the Rh loss accounted for only 5 % of the weight of the lost Pt. The Ag loss decreased for the second and third sets (See Figure 1). The evaporative loss of Ag from downstream gauzes was reduced as the gas phase is partially saturated with Ag from up-stream gauzes. The concentration of platinum in the Ag nets decreased from upper to lower gauzes. However, the highest quantity of platinum was found in the second set of gauzes (see Figure 2). This can be associated with the large loss of Ag from the upper set of Ag nets. The efficiency of platinum recovery on the Ag nets naturally followed the same trend as mass of platinum recovered on the nets (See Figure 3).

**Table 1**

| Installed | | | After exposure | | | | | | | | | |
|---|---|---|---|---|---|---|---|---|---|---|---|---|
| Gauze number | Location | Total mass | Total mass | Pt | Pd | Ag | Pt | Pd | Ag | Pt recovered | Ag loss | |
| | | g | G | wt% | wt% | wt% | g | g | g | % | g | % |
| 1-3 | Upper | 42,87 | 13,77 | 2,51 | 0,74 | 96,75 | 0,35 | 0,10 | 13,32 | 8,2 | 29,6 | 68,9 |
| 4-6 | Middle | 42,60 | 29,48 | 1,82 | 0,42 | 97,76 | 0,54 | 0,12 | 28,82 | 12,6 | 13,8 | 32,3 |
| 7-9 | lower | 43,48 | 38,29 | 0,82 | 0,12 | 99,06 | 0,31 | 0,05 | 37,93 | 7,2 | 5,6 | 12,7 |
| Total | | 128,95 | | | | | 1,20 | 0,27 | 80,07 | 28,0 | 48,9 | 37.9 |

## Claims

1. A recovery system for recovering volatile precious metals from a gas phase, **characterized in that** the recovery system comprises a plurality of woven or knitted metallic silver gauzes stacked on top of each other, or a plurality of layers of a ceramic or glass support coated with metallic silver, or a ceramic monolith structure, or a combination thereof.

2. The recovery system according to claim 1, comprising at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3.

3. The recovery system according to claim 2, comprising from 3 to 50 woven or knitted metallic silver gauzes, or from 10 to 30 ceramic or glass support coated with metallic silver, or a combination of woven or knitted metallic silver gauzes and layers of a ceramic or glass support coated with metallic silver, the number of combined gauzes and layers ranging from 3 to 50.

4. The recovery system according to any one of claims 1 and 3, wherein the gauzes have a wire diameter ranging from 150 to 400 micron.

5. A method for recovering volatile precious metals from a gas phase, comprising the step of:
• contacting the gas phase comprising volatile precious metals with a recovery system according to any one of claims 1 to 4.

6. The method according to claim 5, wherein the gas phase comprising volatile precious metals has a temperature ranging from 750 °C to about 950 °C.

7. The method according to claim 6, wherein the gas phase comprising volatile precious metals has a temperature ranging from 850 to 930 °C .

8. The method according to any one of claims 5 to 7, further comprising the step of:
• operating a catalytic system in a system for the catalytic conversion of ammonia into nitric oxide, wherein volatile precious metals are evaporated from the catalytic system, thereby producing a gas phase comprising volatile precious metals.

9. The method according to any one of claims 5 to 8, for recovering volatile precious metals, evaporating, during the catalytic conversion of ammonia into nitric oxide, from the catalytic system used therein, wherein the catalytic system comprises Pt and Rh.

10. The method according to claim 9, wherein the catalytic system used therein further comprises Pd.

11. A system for the catalytic conversion of ammonia into nitric oxide, comprising:
• a catalytic system comprising Pt and Rh, operable at a temperature ranging from 750 to 950 °C ; and, downstream thereof; and
• a recovery system according to anyone of claims 1 to 4.

12. The system according to claim 11, wherein the catalytic system further comprises Pd.

13. The system according to any one of claims 11 to 12, operable at a temperature ranging from 850 to 930 °C .

14. Use of the system according to any one of claims 11 to 13 for the catalytic conversion of ammonia into nitric acid.

15. A method for revamping a system for the catalytic conversion of ammonia into nitric oxide, the system comprising:
• a catalytic system comprising:
∘ one or more precious metals selected from the group consisting of Pd, Pt and Rh; and
∘ a Pd-containing recovery system for recovering a volatile precious metal evaporating during the conversion of ammonia into nitric oxide in the catalytic system;
into a system according to any one of claims 11 to 14, comprising the step of:
• introducing a recovery system according to any one of claims 1 to 4.

16. The method according to claim 15 further comprising the step of:
• removing the Pd-containing recovery system.
